# EUROPEAN PATENT SPECIFICATION

(11) **EP 3 510 252 B1**
(45) Date of publication and mention of the grant of the patent: **23.08.2023**
(21) Application number: 17861178.6
(22) Date of filing: 12.09.2017
(51) Int. Cl.: F01D 17/08, F02C 7/277

(54) **METHOD AND SYSTEM FOR STARTING A GAS TURBINE ENGINE**
VERFAHREN SOWIE SYSTEM ZUM STARTEN EINES GASTURBINENMOTORS
MÉTHODE ET DISPOSITIF DE DÉMARRAGE D'UN TURBOMOTEUR

(30) Priority: 11.10.2016 US 201615290527
(43) Date of publication of application: 17.07.2019
(73) Proprietor: General Electric Company, Schenectady, NY 12345 (US)
(72) Inventor: KEMP, Brian, Christopher, Cincinnati OH 45215 (US); DRANSCHAK, David, Allan, Cincinnati OH 45215 (US); PUTERBAUGH, Theodore, Scott, Cincinnati OH 45215 (US)
(74) Representative: Openshaw & Co.
(86) International application number: PCT/US2017/051072
(87) International publication number: WO 2018/125319

(56) References cited:
- EP-A1- 3 205 858
- US-A- 4 702 273
- US-A- 5 127 220
- US-A1- 2014 373 552

## Description

### FIELD OF THE INVENTION

The present subject matter relates generally to aerial vehicles.

### BACKGROUND OF THE INVENTION

An aerial vehicle can use an air turbine starter to start an engine. A starter air valve can be used to provide fluid to the air turbine starter. The air turbine starter can include an air turbine motor, a speed reducer, and an over-running clutch. The air turbine motor converts energy from the fluid supplied by the starter air valve to high speed rotation energy. The speed reducer converts the high speed, low torque input to low speed, high torque output usable by the engine. The over-running clutch allows for the de-coupling of the air turbine motor and speed reducer from the engine during normal engine operation. The starter air valve operates independently of the air turbine starter. In some cases, the starter air valve can provide excessive fluid to the air turbine starter, which can cause unnecessary wear and tear on an engine accessory gearbox.

US 4 702 273 discloses an electrically controlled starter valve that regulates the flow of compressed gas to an air turbine starter and precisely controls the way in which the flow is reduced after start of the aircraft engine.

### BRIEF DESCRIPTION OF THE INVENTION

Aspects and advantages of embodiments of the present disclosure will be set forth in part in the following description, or may be learned from the description, or may be learned through practice of the embodiments.

The invention is defined by the appended claims. In the following, any method and/or apparatus referred to as embodiments but nevertheless do not fall within the scope of the appended claims are to be understood as examples helpful in understanding the invention.

These and other features, aspects and advantages of various embodiments will become better understood with reference to the following description and appended claims. The accompanying drawings, which are incorporated in and constitute a part of this specification, illustrate embodiments of the present disclosure and, together with the description, serve to explain the related principles.

### BRIEF DESCRIPTION OF THE DRAWINGS

Detailed discussion of embodiments directed to one of ordinary skill in the art are set forth in the specification, which makes reference to the appended figures, in which:
FIG. 1 depicts an example aerial vehicle according to example embodiments of the present disclosure;
FIG. 2 is a schematic cross-sectional view of a gas turbine engine in accordance with one embodiment of the present disclosure;
FIG. 3 depicts a block diagram of an integrated starter according to example embodiments of the present disclosure;
FIG. 4 depicts an example data structure according to example embodiments of the present disclosure;
FIG. 5 depicts an example data structure according to example embodiments of the present disclosure;
FIG. 6 depicts an example data structure according to example embodiments of the present disclosure;
FIG. 7 depicts a flow diagram of an example method according to example embodiments of the present disclosure; and
FIG. 8 depicts a computing system for implementing one or more aspects according to example embodiments of the present disclosure.

### DETAILED DESCRIPTION OF THE INVENTION

Reference now will be made in detail to embodiments, one or more examples of which are illustrated in the drawings. Each example is provided by way of explanation of the embodiments, not limitation of the embodiments. In fact, it will be apparent to those skilled in the art that various modifications and variations can be made in the present disclosure without departing from the scope of the invention as defined by the appended claims.

Example aspects of the present disclosure are directed to methods and systems associated with an integrated starter for an air turbine vehicle. For instance, the starter air valve and the air turbine starter can be located within a common housing. In addition and/or in the alternative, the starter air valve can be mechanically coupled to the air turbine starter. The integrated starter can start an engine of an aerial vehicle. A starter air valve can provide fluid (e.g., motive air, gases, other fluids, etc.) to the air turbine starter. The air turbine starter can convert the fluid provided to torque energy usable by the engine.

In some embodiments, the integrated starter can include an integrated controller. For instance, the integrated controller can be located within a common housing with the starter air valve and/or the air turbine starter. In addition and/or in the alternative, the integrated controller can be mechanically coupled to the starter air valve and/or the air turbine starter. The integrated controller can be a controller that provides instructions to the integrated starter and not receive feedback. The integrated controller can be configured to provide control signals to components of the integrated starter. In some embodiments, the integrated controller can control the opening and closing of the starter air valve. For instance, as one example, the integrated controller can control the rate of opening of the starter air valve. As another example, the integrated controller can control the opening percentage of the starter air valve. The higher percentage the starter air valve is open, the more fluid can be provided to the air turbine starter.

Optionally, in some embodiments, the starter air valve can include one or more valve sensors. The one or more valve sensors can include a pressure gauge, a vacuum gauge, a manometer, the like, and/or any combination of the foregoing. The one or more valve sensors can measure pressure and/or temperature associated with the air turbine starter. The starter air valve can modify the rate of opening (or closing) and/or the open percentage in response to the measured pressure and/or temperature. For example, if the measured pressure and/or temperature indicate that the torque output should increase, then the starter air valve can modify the rate of opening and/or the opening percentage to increase the fluid provided to the air turbine starter.

Optionally, in some embodiments, the air turbine starter can include one or more starter sensors. For example, the one or more starter sensors can be included on a stationary portion of the air turbine starter to monitor a rotating portion of the air turbine starter. The one or more starter sensors can provide signals indicative of a frequency associated with the air turbine starter. The one or more starter sensors can provide signals indicative of a magnitude associated with the air turbine starter. For instance, in some embodiments, the one or more starter sensors can include an accelerometer, a microphone, the like, and/or any combination of the foregoing. The one or more starter sensors can measure mechanical vibration and/or sound. The one or more starter sensors can transmit signals indicative of the measured mechanical vibration and/or sound to one or more computing devices and/or a controller. The one or more computing devices and/or the controller can determine an irregular movement of the rotating portion of the air turbine starter based at least in part on the one or more signals. The one or more computing devices and/or the controller can create a notification to indicate a problem with the integrated starter, engine, and/or accessory gearbox in response to the determined irregular movement of the rotating portion of the air turbine starter.

The integrated starter can include and/or be in communication with a second controller. A second controller can be a controller that provides instructions to the integrated starter and receives feedback. The feedback can come from the one or more valve sensors. For example, the feedback can include pressure and/or temperature. The second controller can cause adjustments to be made to the integrated starter, such as changes to the rate of opening of the starter air valve and/or opening percentage of the starter air valve based on the feedback.

In this way, the systems and methods according to aspects of the present claimed invention can have a technical effect of tailoring the fluid provided by the starter air valve to the air turbine starter to reduce or limit damage to an engine or engine components (e.g., gearbox) during an engine start. Additionally, in some embodiments, the systems and methods according to example aspects of the present disclosure have a technical effect of sensing damage to the integrated starter. Additionally, in some embodiments, the systems and methods according to example aspects of the present disclosure have a technical effect of creating a more complete engine combustion of the fluid used. Additionally, in some embodiments, the systems and methods according to example aspects of the present disclosure have a technical effect of reducing emissions during an engine start sequence. Additionally, in some embodiments, the systems and methods according to example aspects of the present disclosure have a technical effect of reducing an amount of bleed air extracted for air turbine starter use to allow for redistribution to other high priority needs. Additionally, in some embodiments, the systems and methods according to example aspects of the present disclosure have a technical effect of monitoring a speed of the engine to allow for a restart that would not result in air turbine starter deterioration and/or engine accessory gearbox deterioration. Additionally, in some embodiments, the systems and methods according to example aspects of the present disclosure have a technical effect of more uniform cooling during gate stops. Additionally, in some embodiments, the systems and methods according to example aspects of the present disclosure have a technical effect of improving system performance reliability. Additionally, in some embodiments, the systems and methods according to example aspects of the present disclosure have a technical effect of controlling start impulse load on engine so as to cause the impulse load to be uniform from start to start.

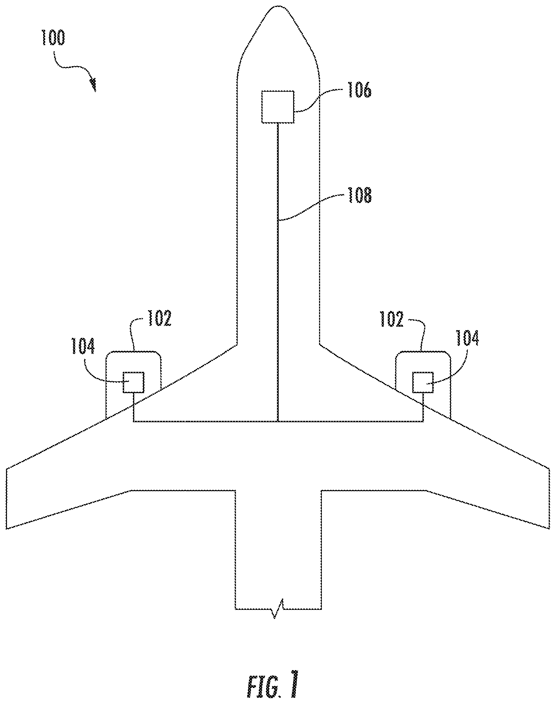

FIG. 1 depicts an aerial vehicle 100 according to example embodiments of the present disclosure. The aerial vehicle 100 can include one or more engines 102. In some implementations, at least one of the one or more engines 102 can be configured as one or more gas turbine engines. For example, the one or more engines 102 can include a compressor section, a combustion section, and a turbine section in serial flow order. One or more of the one or more engines 102 can be configured as a turbofan engine, a turbojet engine, a turboprop engine, a turboshaft engine, etc. In other implementations, one or more of the one or more engines 102 can be an internal combustion engine, or any other suitable engine for use in an aircraft. The one or more engines 102 can include an integrated starter as described in more detail below. The one or more integrated starters 104 can communicate with a controller 106 via a communication path 108. The controller 106 can be, for example, a full authority digital engine control (FADEC). The communication path 108 can be, for example, a communication bus, such as an aircraft communication bus.

The numbers, locations, and/or orientations of the components of example aerial vehicle 100 are for purposes of illustration and discussion and are not intended to be limiting. Those of ordinary skill in the art, using the disclosures provided herein, shall understand that the numbers, locations, and/or orientations of the components of the aerial vehicle 100 can be adjusted without deviating from the scope of the present disclosure.

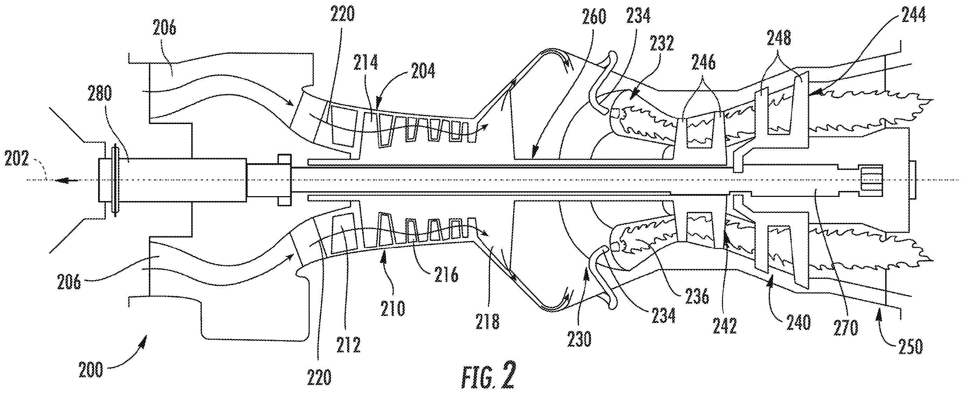

FIG. 2 provides a schematic cross-sectional view of an example gas turbine engine 200 in accordance with the present disclosure. As shown in FIG. 2, the gas turbine engine 200 defines a longitudinal or centerline axis 202 extending therethrough for reference. The gas turbine engine 200 may generally include a substantially tubular outer casing 204 that defines an annular inlet 206. The outer casing 204 may be formed from a single casing or multiple casings. The outer casing 204 encloses, in serial flow relationship, a gas generator compressor 210, a combustion section 230, a turbine 240, and an exhaust section 250. The gas generator compressor 210 includes an annular array of inlet guide vanes 212, one or more sequential stages of compressor blades 214, one or more sequential stages of compressor vanes 216, and a centrifugal compressor 218. Collectively, the compressor blades 214, the compressor vanes 216, and the centrifugal compressor 218 define a compressed air path 220. The gas turbine engine 200 can include one or more sensors (not shown) for sensing information related to the gas turbine engine 200.

The combustion section 230 includes a combustion chamber 232 and one or more fuel nozzles 234 extending into the combustion chamber 232. The fuel nozzles 234 supply fuel to mix with compressed air entering the combustion chamber 232. Further, the mixture of fuel and compressed air combust within the combustion chamber 232 to form combustion gases 236. As will be described below in more detail, the combustion gas 236 drives the turbine 240.

The turbine 240 includes a gas generator turbine 242 and a power turbine 244. The gas generator turbine 242 includes one or more sequential stages of turbine rotor blades 246, and the power turbine 244 includes one or more sequential stages of turbine rotor blades 248. The gas generator turbine 242 drives the gas generator compressor 210 via a gas generator shaft 260, and the power turbine 244 drives an output shaft 280 via a power turbine shaft 270.

As shown in the embodiment illustrated in FIG. 2, the gas generator compressor 210 and the gas generator turbine 242 are coupled to one another via the gas generator shaft 260. In operation, the combustion gases 236 drives both the gas generator turbine 242 and the power turbine 244. As the gas generator turbine 242 rotates around the centerline axis 202, the gas generator compressor 210 and the gas generator shaft 260 both rotate around the centerline axis 202. Further, as the power turbine 244 rotates, the power turbine shaft 270 rotates and transfers rotational energy to the output shaft 280. As an example, the gas turbine engine 200 may be the first and second gas turbine engines 102 of FIG. 1.

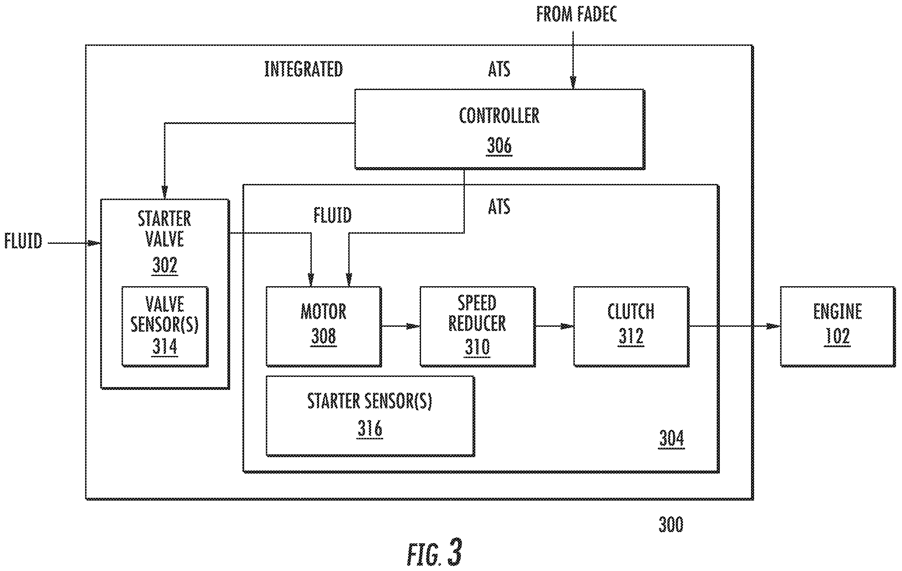

FIG. 3 depicts a block diagram of an integrated starter 300 according to example embodiments of the present disclosure. The integrated starter 300 can be in and/or coupled to the engine 102 of FIG. 1. The integrated starter 300 can include a starter air valve 302, an air turbine starter 304, and an integrated controller 306. The starter air valve 302 can be integrated with the air turbine starter 304. For instance, the starter air valve 302 and the air turbine starter 304 can be located within a common housing. As another example, the starter air valve 302 can be mechanically coupled to the air turbine starter 304. The air turbine starter 304 can include an air turbine motor 308, a speed reducer 310, and an over-running clutch 312.

The starter air valve 302 can be in communication with the integrated controller 306. The integrated controller 306 can receive a signal from a full authority digital engine control (FADEC). The starter air valve 302 can regulate fluid flow to the air turbine motor 308 based on a signal received from the integrated controller 306. The signal received from the integrated controller 306 can be based on the signal received from the FADEC. The air turbine motor 308 can convert energy from the fluid supplied by the starter air valve 302 to high speed rotation energy. The speed reducer 310 can convert the high speed rotation energy (high speed, low torque) from the air turbine motor 308 into low speed, high torque used to rotate the over-running clutch 312. The rotating over-running clutch 312 can be used to engage with and start the engine 102.

The integrated controller 306 can control the rate of opening of the starter air valve 302. For example, the integrated controller 306 can cause the starter air valve 302 to open and shut at a rate of twice per second, or any other rate. The integrated controller 306 can control the open percentage of the starter air valve 302. For example, the integrated controller 306 can cause the starter air valve 302 can open to 53%, or any other value between 0% and 100%. The percentage open of the starter air valve 302 can be the position of the starter air valve 302. Changing the rate of opening and/or the open percentage of the starter air valve 302 can modify the fluid provided to the air turbine starter 304 from the starter air valve 302. The air turbine starter 304 can convert energy from the fluid provided to the air turbine starter 304 from the starter air valve 302 to a torque output usable for starting the engine 102.

Optionally, the starter air valve 302 can include one or more valve sensors 314. The one or more valve sensors 314 can include a pressure gauge, a vacuum gauge, a manometer, the like, and/or any combination of the foregoing. The one or more valve sensors 314 can measure pressure and/or temperature. The pressure and/or temperature can indicate a condition of the starter air valve 302. The starter air valve 302 can modify the rate of opening and/or the open percentage in response to the measured pressure and/or temperature. For example, if the measured pressure and/or temperature indicate that the energy should increase, then the starter air valve 302 can modify the rate of opening and/or the open percentage to increase the fluid provided to the air turbine starter 304. As a further example, if the measured pressure and/or temperature indicate that the energy should increase, then the starter air valve 302 can modify the open percentage of the starter air valve 302 from 75% to 80%. As another further example, if the measured pressure and/or temperature indicate that the energy should increase, then the starter air valve 302 can modify the rate of opening of the starter air valve 302 from 300ms open per second to 750ms open per second. The numerical examples provided herein are provided for purposes of illustration and discussion and are not intended to be limiting of the present disclosure.

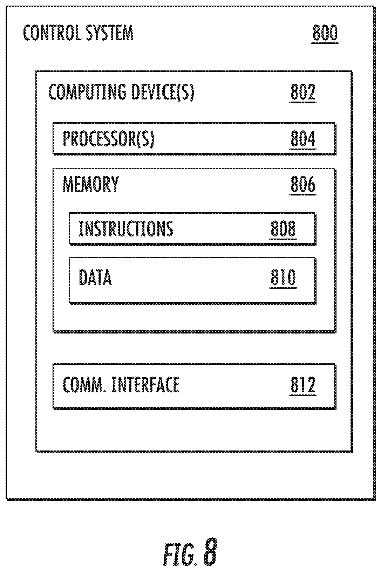

Optionally, the air turbine starter 304 can include one or more starter sensors 316. For example, the one or more starter sensors 316 can be included on a stationary portion of the air turbine starter 304 to monitor a rotating portion of the air turbine starter 304. In another embodiment, the one or more starter sensors 316 can be included on the rotating portion of the air turbine starter 304 to monitor the rotating portion of the air turbine starter 304. The one or more starter sensors 316 can include an accelerometer, a microphone, the like, and/or any combination of the foregoing. The one or more starter sensors 316 can measure mechanical vibration and/or sound. The one or more starter sensors 316 can transmit the measured mechanical vibration and/or sound to a computing device, such as the computing device 800 of FIG. 8. The computing device 800 can be local to the integrated starter 300. The computing device 800 can be located in the engine 102. The one or more starter sensors 316 can transmit the measured mechanical vibration and/or sound to a controller. The controller can be local to the integrated starter 300. The controller can be located in the engine 102. The computing device 800 and/or the controller can determine an irregular movement of the rotating portion of the air turbine starter 304 based on the measured mechanical vibration and/or sound. The one or more starter sensors 316 can identify anomalies. The identified anomalies can originate from the integrated starter 300, engine 102, and/or accessory gearbox. The computing device 800 and/or the controller can create a notification to indicate a problem with the integrated starter 300, engine 102, and/or accessory gearbox in response to the determined irregular movement of the rotating portion of the air turbine starter 304.

The integrated starter 300 can include a second controller. The integrated starter 300 can be in communication with a second controller. In an embodiment, the second controller can be integrated into the integrated starter 300. In another embodiment, the second controller can be integrated into a full authority digital engine control (FADEC) of an engine. The second controller can be a control system 800 of FIG. 8. The second controller can be used to intelligently operate the starter air valve 302. For example, the second controller can select an initial valve setting (or an initial start setting) for the starter air valve 302. As another example, the second controller can select a valve setting sequence (or a start sequence) for the starter air valve 302. The valve setting can include a rate of opening and/or an opening percentage. The valve setting sequence can include a set of rates of opening and/or opening percentages associated with durations.

In an embodiment, the second controller can receive feedback. For example, the second controller can receive feedback from the one or more valve sensors. The second controller can adjust a valve setting of the starter air valve 302 based on the received feedback. For example, if the received feedback indicates that the air turbine starter 304 needs more fluid, then the second controller can adjust the starter air valve 302 to increase the opening percentage and/or the opened portion of the rate of opening.

In an embodiment, the second controller can receive feedback. For example, the second controller can receive feedback from the one or more starter sensors. The second controller can associate start sequences with performance of the integrated starter 300 based on the received feedback. The second controller can determine if one or more of the start sequences have a negative impact on the integrated starter 300. The start sequences can be updated based on the feedback from the one or more starter sensors. Information from multiple second controllers can be aggregated to determine if the start sequences should be altered.

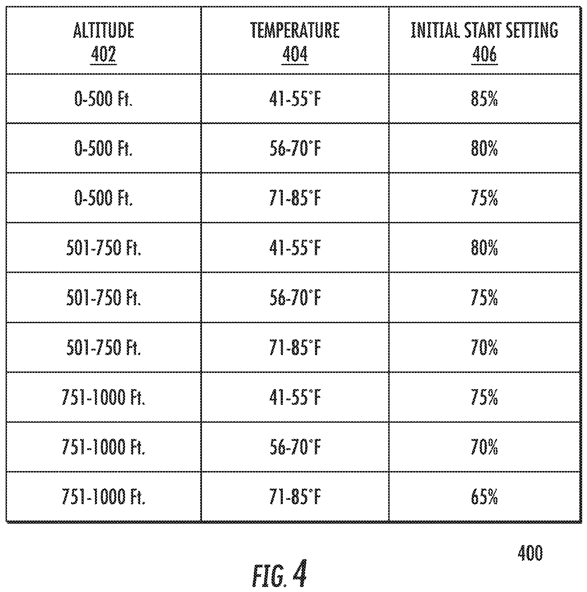

FIG. 4 depicts an example data structure 400 according to the claimed invention. The data structure 400 associates a given altitude 402 and a given temperature 404 to an initial start setting 406. On initiating a start, the second controller can receive parameters, such as an altitude and a temperature, and use the data structure 400 to locate a corresponding initial start setting 406. The second controller can control the starter air valve 302 according to the corresponding initial start setting 406. The second controller can later adjust the starter air valve 302 away from the initial start setting 406 based on received feedback. Although the illustrated data structure 400 is a lookup table used to associate a given altitude value with a given temperature value to arrive at an initial start percentage setting, any data structure for associating given parameters to arrive at an initial start setting can be used. Although the initial start settings 406 are shown as opening percentages, any other start settings, such as rates of opening or combinations of the foregoing, can be used.

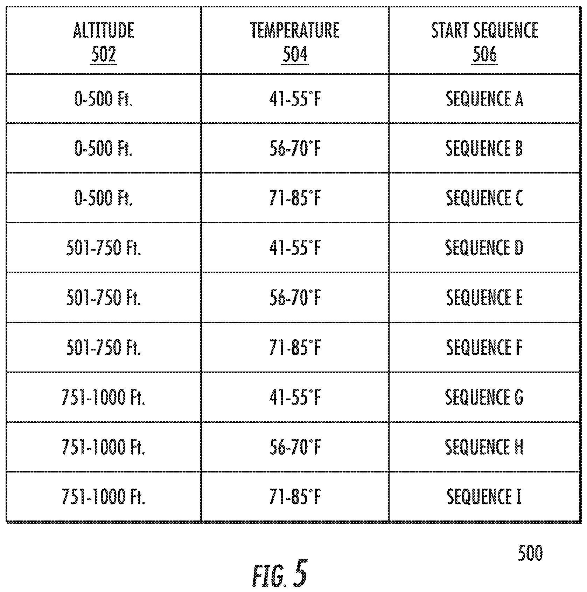

FIG. 5 depicts an example data structure 500 according to example embodiments of the present disclosure. The data structure 500 associates a given altitude 502 and a given temperature 504 to a start sequence 506. On initiating a start, the second controller can receive parameters, such as an altitude and a temperature, and use the data structure 500 to locate a corresponding start sequence 506. The second controller can control the starter air valve 302 according to the corresponding start sequence 506. The second controller can later adjust the starter air valve 302 away from the initial start setting 406 based on received feedback. Although the illustrated data structure 500 is a lookup table used to associate a given altitude value with a given temperature value to arrive at a start sequence, any data structure for associating given parameters to arrive at a start sequence can be used.

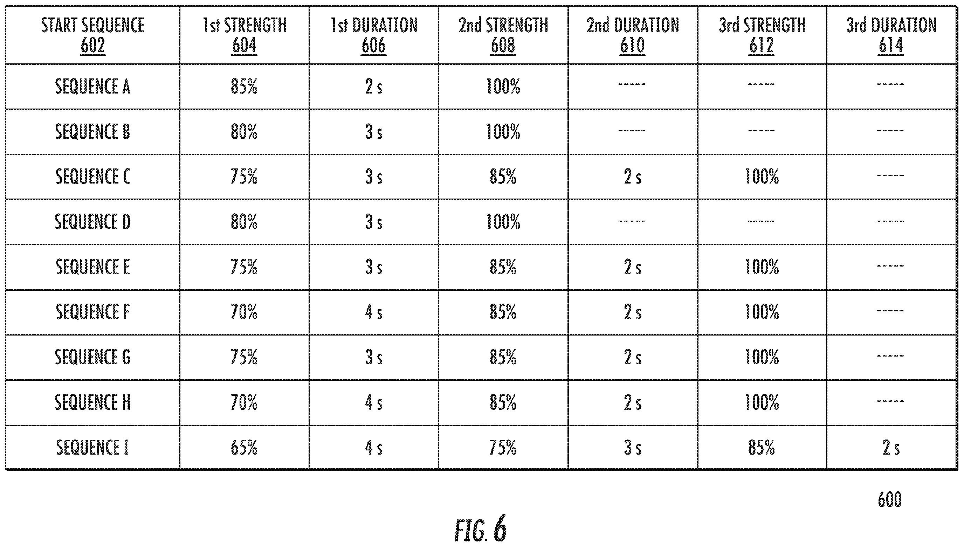

FIG. 6 depicts an example data structure 600 according to example embodiments of the present disclosure. The data structure 600 maps a start sequence name 602 with the details of the start sequence 604-614. The details of a start sequence can include a first strength 604 and a first duration 606. A strength can be an opening percentage, a rate of opening, the like, or a combination of the foregoing. The first strength 604 can be performed for the first duration 606. After the first duration 606, a start sequence can perform a second strength 608 for a second duration 610. After the second duration 610, a start sequence can perform a third strength 612 for a third duration, and so on. The start sequence can continue until the start sequence ends, until full combustion, until the engine starts, or the like. Although the illustrated data structure 600 is a lookup table used to associate a given start sequence name with the details of the associated start sequence, any data structure for associating given start sequence name with the details of the associated start sequence.

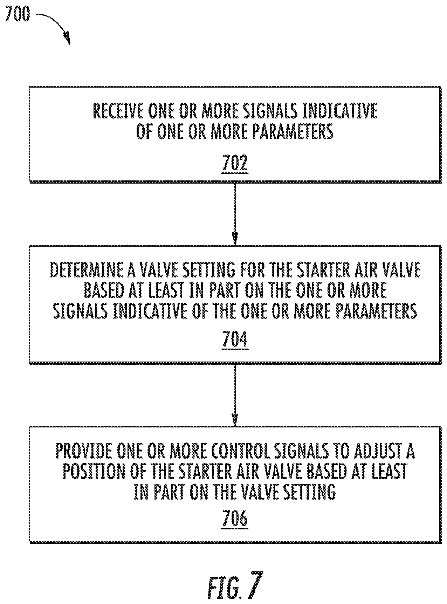

FIG. 7 depicts a flow diagram of an example method (700) for starting an engine using an integrated starter. The method of FIG. 7 can be implemented using, for instance, the integrated controller 306 of FIG. 3 and/or the control system 800 of FIG. 8. FIG. 7 depicts steps performed in a particular order for purposes of illustration and discussion. Those of ordinary skill in the art, using the disclosures provided herein, will understand that various steps of any of the methods disclosed herein can be adapted, modified, rearranged, or modified in various ways without deviating from the scope of the present disclosure.

At (702), one or more parameters can be received. For instance, the second controller can receive one or more parameters. As another example, the control system 800 can receive one or more parameters. The one or more parameters can include an altitude, such as an altitude at which the aerial vehicle 100 currently is. The one or more parameters can include a temperature, such as an outside temperature surrounding the aerial vehicle 100. The one or more received parameters can be, for example, one or more signals indicative of an environment surrounding an aircraft, such as ambient temperature or altitude of an aircraft. The one or more received parameters can be, for example, one or more signals indicative of an environment surrounding an engine, such as engine speed or torque.

At (704), a valve setting for the starter air valve can be determined based at least in part on the one or more parameters. For instance, the second controller can determine a valve setting for the starter air valve 302 based at least in part on the one or more parameters. As another example, the control system 800 can determine a valve setting for the starter air valve 302 based at least in part on the one or more parameters. The valve setting is an initial setting for the starter air valve. The initial setting for the starter air valve can include a valve opening percentage for the starter air valve. The initial setting for the starter air valve can include a rate of opening for the starter air valve. The valve setting can include a sequence of operating the starter air valve. The sequence can include a set of valve opening percentages and associated durations. The sequence can include comprises a set of rates of opening and associated durations. The valve setting for the starter air valve can be determined, for example, based at least in part on the one or more signals indicative of an environment surrounding an aircraft, such as ambient temperature or altitude of an aircraft. The valve setting for the starter air valve can be determined, for example, based at least in part on the one or more signals indicative of an environment surrounding an engine, such as engine speed or torque.

At (706), one or more control signals can be provided to adjust a position of the starter air valve based at least in part on the valve setting. For instance, the second controller can provide one or more control signals to adjust a position of the starter air valve 302 based at least in part on the valve setting. As another example, the control system 800 can provide one or more control signals to adjust a position of the starter air valve 302 based at least in part on the valve setting. The position of the starter air valve 302 can regulate the flow of fluid into the air turbine starter 304. Fluid can be caused to be consumed by a starter in accordance with the valve setting. For instance, the second controller can cause fluid to be consumed by the air turbine starter 304 in accordance with the valve setting. As another example, the control system 800 can cause fluid to be consumed by the air turbine starter 304 in accordance with the valve setting.

Optionally, one or more environmental parameters can be received. For instance, the second controller can receive one or more environmental parameters. As another example, the control system 800 can receive one or more environmental parameters. The one or more environmental parameters can include an altitude, such as an altitude at which the aerial vehicle 100 currently is. The one or more environmental parameters can include a temperature, such as an outside temperature surrounding the aerial vehicle 100. The one or more environmental parameters can include information from one or more valve sensors, such as pressure and/or temperature in the integrated starter 300. The one or more environmental parameters can include information from one or more starter sensors, such as mechanical vibration and/or sound. The one or more environmental parameters can include information from one or more engines, such as engine speed and/or torque. Optionally, a second valve setting can be determined based on the one or more environmental parameters. For instance, the second controller can determine a second valve setting based on the one or more environmental parameters. As another example, the control system 800 can determine a second valve setting based on the one or more environmental parameters. Optionally, the opening of the valve can be caused to be adjusted from the initial setting for the starter air valve based on the second valve setting based on one or more second control signals. For instance, the second controller can cause the opening of the starter air valve 302 to be adjusted from the initial setting for the starter air valve based on the second valve setting by providing one or more second control signals. As another example, the control system 800 can cause the opening of the starter air valve 302 to be adjusted from the initial setting for the starter air valve based on the second valve setting by providing one or more second control signals.

FIG. 8 depicts a block diagram of an example computing system that can be used to implement the control system 800 or other systems of the aircraft according to example embodiments of the present disclosure. As shown, the control system 800 can include one or more computing device(s) 802. The one or more computing device(s) 802 can include one or more processor(s) 804 and one or more memory device(s) 806. The one or more processor(s) 804 can include any suitable processing device, such as a microprocessor, microcontroller, integrated circuit, logic device, or other suitable processing device. The one or more memory device(s) 806 can include one or more computer-readable media, including, but not limited to, non-transitory computer-readable media, RAM, ROM, hard drives, flash drives, or other memory devices.

The one or more memory device(s) 806 can store information accessible by the one or more processor(s) 804, including computer-readable instructions 808 that can be executed by the one or more processor(s) 804. The instructions 808 can be any set of instructions that when executed by the one or more processor(s) 804, cause the one or more processor(s) 804 to perform operations. The instructions 808 can be software written in any suitable programming language or can be implemented in hardware. In some embodiments, the instructions 808 can be executed by the one or more processor(s) 804 to cause the one or more processor(s) 804 to perform operations, such as the operations for starting an engine, as described with reference to FIG. 7, or any other operations or functions of the one or more computing device(s) 802.

The memory device(s) 806 can further store data 810 that can be accessed by the processors 804. For example, the data 810 can include data sensed by the one or more valve sensors, data sensed by the one or more starter sensors, data used to start an engine, such as data structures described in reference to FIGs. 3-5, and/or any other data associated with aerial vehicle 100, as described herein. The data 810 can include one or more table(s), function(s), algorithm(s), model(s), equation(s), etc. for starting an engine 102 according to example embodiments of the present disclosure.

The one or more computing device(s) 802 can also include a communication interface 812 used to communicate, for example, with the other components of system. The communication interface 812 can include any suitable components for interfacing with one or more network(s), including for example, transmitters, receivers, ports, controllers, antennas, or other suitable components.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

Metric equivalents of the imperial units of Fig. 4 and of Fig. 5 are as follows:

| Altitude | Temperature | Altitude | Temperature |
|---|---|---|---|
| 0-500 Ft. | 41-55°F | 0-152.4 m | 5.0 °C - 12.8 °C |
| 0-500 Ft. | 56-70°F | 0-152.4 m | 13.3 °C - 21.1 °C |
| 0-500 Ft. | 71-85°F | 0-152.4 m | 21.7 °C - 29.4 °C |
| 501-750 Ft. | 41-55°F | 152.7-228.6 m | 5.0 °C - 12.8 °C |
| 501-750 Ft. | 56-70°F | 152.7-228.6 m | 13.3 °C - 21.1 °C |
| 501-750 Ft. | 71-85°F | 152.7-228.6 m | 21.7 °C - 29.4 °C |
| 751-1000 Ft. | 41-55°F | 228.9-304.8 m | 5.0 °C - 12.8 °C |
| 751-1000 Ft. | 56-70°F | 228.9-304.8 m | 13.3 °C - 21.1 °C |
| 751-1000 Ft. | 71-85°F | 228.9-304.8 m | 21.7 °C - 29.4 °C |

## Claims

1. A method (700) for starting an engine (102) using an integrated starter (300), the integrated starter comprising a starter air valve (302) and an air turbine starter (304), the method comprising:
receiving (702), at a controller (306), a plurality of signals indicative of a plurality of parameters comprising at least a temperature (404) and an altitude (402);
determining (704), at the controller (306), an initial start setting (406) for the starter air valve (302) based on a data structure (400) stored in the controller (306) that associates a given altitude (402) and a given temperature (404) to an initial start setting (406); and
providing (706), by the controller (306), one or more control signals to adjust a position of the starter air valve (302) based at least in part on the initial start setting (406),
wherein the position of the starter air valve (302) regulates the flow of fluid into the air turbine starter.

2. The method of claim 1, further comprising:
receiving one or more environmental parameters;
determining a second valve setting based on the one or more environmental parameters; and
providing one or more second control signals to adjust the position of the starter air valve based (302) at least in part on the second valve setting.

3. The method of claim 2, wherein the one or more environmental parameters comprise a pressure.

4. The method of claim 2, wherein the one or more environmental parameters comprise a temperature (404).

5. The method of claim 1, wherein the initial setting for the starter air valve (302) comprises a valve opening percentage for the starter air valve.

6. The method of claim 1, wherein the initial setting for the starter air valve (302) comprises a rate of opening for the starter air valve.

7. A system for starting an engine (102) comprising: an integrated starter (300) comprising:
an air turbine starter (304);
a starter air valve (302); and
a controller (306), configured to perform the method (700) of any of claims 1 to 6.

8. The system of claim 7, wherein the controller is located on the integrated starter (300).

9. The system of claim 7, wherein the controller is located in a full authority digital engine control (FADEC) of the engine.

10. An aerial vehicle (100) comprising:
an engine (102);
the integrated starter (300) of any of claims 7 to 9.

## Patentansprüche

1. Verfahren (700) zum Starten eines Triebwerks (102) unter Verwendung eines integrierten Starters (300), wobei der integrierte Starter ein Starterluftventil (302) und einen Luftturbinenstarter (304) umfasst, wobei das Verfahren umfasst:
Empfangen (702), an einer Steuerung (306), einer Vielzahl von Signalen, die eine Vielzahl von Parametern angeben, die mindestens eine Temperatur (404) und eine Höhe (402) umfassen;
Bestimmen (704), an der Steuerung (306), einer anfänglichen Starteinstellung (406) für das Starterluftventil (302) basierend auf einer Datenstruktur (400), die in der Steuerung (306) gespeichert ist, die eine gegebene Höhe (402) und eine gegebene Temperatur (404) zu einer anfänglichen Starteinstellung (406) zuordnet; und
Bereitstellen (706), durch die Steuerung (306), eines oder mehrerer Steuersignale, um eine Position des Starterluftventils (302) mindestens teilweise basierend auf der anfänglichen Starteinstellung (406) einzustellen,
wobei die Position des Starterluftventils (302) den Fluidstrom in den Luftturbinenstarter regelt.

2. Verfahren nach Anspruch 1, ferner umfassend:
Empfangen eines oder mehrerer Umgebungsparameter;
Bestimmen einer zweiten Ventileinstellung basierend auf dem einen oder den mehreren Umgebungsparametern; und
Bereitstellen eines oder mehrerer zweiter Steuersignale, um die Position des Starterluftventils basierend (302) mindestens teilweise auf der zweiten Ventileinstellung einzustellen.

3. Verfahren nach Anspruch 2, wobei der eine oder die mehreren Umgebungsparameter einen Druck umfassen.

4. Verfahren nach Anspruch 2, wobei der eine oder die mehreren Umgebungsparameter eine Temperatur (404) umfassen.

5. Verfahren nach Anspruch 1, wobei die anfängliche Einstellung für das Starterluftventil (302) einen Ventilöffnungsprozentsatz für das Starterluftventil umfasst.

6. Verfahren nach Anspruch 1, wobei die anfängliche Einstellung für das Starterluftventil (302) eine Öffnungsgeschwindigkeit für das Starterluftventil umfasst.

7. System zum Starten eines Triebwerks (102), umfassend:
einen integrierten Starter (300), umfassend:
einen Luftturbinenstarter (304);
ein Starterluftventil (302); und
eine Steuerung (306), die konfiguriert ist, um das Verfahren (700) nach einem der Ansprüche 1 bis 6 durchzuführen.

8. System nach Anspruch 7, wobei sich die Steuerung auf dem integrierten Starter (300) befindet.

9. System nach Anspruch 7, wobei sich die Steuerung in einer digitalen Triebwerkssteuerung mit voller Autorität (FADEC) des Motors befindet.

10. Luftfahrzeug (100), umfassend:
ein Triebwerk (102);
den integrierten Starter (300) nach einem der Ansprüche 7 bis 9.

## Revendications

1. Procédé (700) permettant de démarrer un moteur (102) à l'aide d'un démarreur intégré (300), le démarreur intégré comprenant une vanne d'air de démarreur (302) et un démarreur de turbine à air (304), le procédé comprenant :
la réception (702), au niveau d'un organe de commande (306), d'une pluralité de signaux indiquant une pluralité de paramètres comprenant au moins une température (404) et une altitude (402) ;
la détermination (704), au niveau de l'organe de commande (306), d'un réglage de démarrage initial (406) pour la vanne d'air de démarreur (302) en fonction d'une structure de données (400) stockée dans l'organe de commande (306) qui associe une altitude donnée (402) et une température donnée (404) à un réglage de démarrage initial (406) ; et
la fourniture (706), par l'organe de commande (306), d'un ou plusieurs signaux de commande pour ajuster une position de la vanne d'air de démarreur (302) en fonction au moins en partie du réglage de démarrage initial (406),
dans lequel la position de la vanne d'air de démarreur (302) régule l'écoulement de fluide dans le démarreur de turbine à air.

2. Procédé selon la revendication 1, comprenant en outre :
la réception d'un ou plusieurs paramètres environnementaux ;
la détermination d'un second réglage de vanne en fonction du ou des paramètres environnementaux ; et
la fourniture d'un ou plusieurs seconds signaux de commande pour ajuster la position de la vanne d'air de démarreur en fonction (302) au moins en partie du second réglage de vanne.

3. Procédé selon la revendication 2, dans lequel le ou les paramètres environnementaux comprennent une pression.

4. Procédé selon la revendication 2, dans lequel le ou les paramètres environnementaux comprennent une température (404).

5. Procédé selon la revendication 1, dans lequel le réglage initial pour la vanne d'air de démarreur (302) comprend un pourcentage d'ouverture de vanne pour la vanne d'air de démarreur.

6. Procédé selon la revendication 1, dans lequel le réglage initial pour la vanne d'air de démarreur (302) comprend un taux d'ouverture pour la vanne d'air de démarreur.

7. Système permettant de démarrer un moteur (102) comprenant :
un démarreur intégré (300) comprenant :
un démarreur de turbine à air (304) ;
une vanne d'air de démarreur (302) ; et
un organe de commande (306), conçu pour mettre en oeuvre le procédé (700) selon l'une quelconque des revendications 1 à 6.

8. Système selon la revendication 7, dans lequel l'organe de commande est localisé sur le démarreur intégré (300).

9. Système selon la revendication 7, dans lequel l'organe de commande est localisé dans une commande numérique de moteur pleine autorité (FADEC) du moteur.

10. Véhicule aérien (100) comprenant :
un moteur (102) ;
le démarreur intégré (300) selon l'une quelconque des revendications 7 à 9.
